# EUROPÄISCHE PATENTSCHRIFT

(11) **EP 2 962 351 B1**
(45) Veröffentlichungstag und Bekanntmachung des Hinweises auf die Patenterteilung: **29.11.2017**
(21) Anmeldenummer: 14701943.4
(22) Anmeldetag: 17.01.2014
(51) Int. Cl.: H01M 8/04029, H01M 8/241, H01M 8/008, H01M 8/0267, H01M 8/1007, H01M 4/86

(54) **BRENNSTOFFZELLENSYSTEM**
FUEL CELL SYSTEM
SYSTÈME DE PILES À COMBUSTIBLE

(30) Priorität: 27.02.2013 DE 102013203311
(43) Veröffentlichungstag der Anmeldung: 06.01.2016
(73) Patentinhaber: Bayerische Motoren Werke Aktiengesellschaft, 80809 München (DE)
(72) Erfinder: HAASE, Stefan, 85247 Schwabhausen (DE); SCHMID, Johannes, 81375 München (DE)
(86) Internationale Anmeldenummer: PCT/EP2014/050927
(87) Internationale Veröffentlichungsnummer: WO 2014/131549

(56) Entgegenhaltungen:
- US-A- 4 115 627
- US-A1- 2006 269 827

## Beschreibung

Die vorliegende Erfindung betrifft ein Brennstoffzellensystem mit mehreren zu einem Stapel zusammengefassten Einzel-Brennstoffzellen, die jeweils aus einer im wesentlichen ebenen Membran-Elektroden-Einheit, zwei an die einander gegenüberliegenden größeren Oberflächen der Membran-Elektroden-Einheit angrenzenden Gasdiffusionslagen in Form einer Faserstruktur und einer die elektrische Verbindung zur benachbarten darüber oder darunter liegenden Einzel-Brennstoffzelle herstellenden Bipolarplatte, aufweisend einen von einem Randbereich umgebenen aktiven Bereich, bestehen.

Brennstoffzellensysteme realisieren durch den Einsatz von Katalysatoren bestehend aus Platin bzw. Platin enthaltenden Legierungen hohe Leistungsdichten, wobei aktive Flächen von 200 bis 350 cm² verwendet werden. Diese Brennstoffzellensysteme besitzen in der Regel Kühlplatten, in denen ein Kühlmedium geführt wird. Um ein Flussfeld für das Kühlmedium zu erzeugen, sind üblicherweise profilierte Bipolarplatten erforderlich. Als Membranen werden kostenintensive perfluorierte Membranen verwendet. Zusätzlich ist eine Endplatteneinheit pro Brennstoffzellenstapel erforderlich.

Die hohen Leistungsdichten erfordern ein aufwändiges Kühlungs- und Befeuchtungskonzept für die Membranen, senken die Effizienz und fördern die Korrosion der Komponenten. Ein Kühlkonzept mit Flüssigkeitskühlung erfordert Kühlkanäle, welche die Bauhöhe der einzelnen Zellen vergrößern. Der elektrische Widerstand des Kontakts der für die Forvergrößern. Der elektrische Widerstand des Kontakts der für die Formung der Kühlkanäle notwendigen Bipolarplatten verringert die Leistungsfähigkeit und/oder erfordert Beschichtungsprozesse zur Minimierung. Konstruktionen mit aufwändigen Flussfeldern haben einen erhöhten Platzbedarf und sorgen aufgrund mehrerer Produktionsschritte bei der Herstellung für zusätzliche Kosten. Ferner ist aufgrund der geringen Verfügbarkeit des Edelmetalls Platin und des hohen Bedarfs pro Brennstoffzelle keine ausreichende Marktdurchdringung mit Brennstoffzellenfahrzeugen möglich. Auch sind die verwendeten perfluorierten Membranen aufwändig herzustellen und kostenintensiv. Die Druckschriften US 4,115,627 A1 und US 2006/269827 A1 sind Stand der Technik. Ausgehend von diesem Stand der Technik ist es daher Aufgabe der vorliegenden Erfindung, ein Brennstoffzellensystem der eingangs genannten Art zu schaffen, welches besonders dünn baut, keine Nachteile hinsichtlich Gewicht, Volumen und Leistungsgrad aufweist und darüber hinaus kostengünstig realisiert werden kann.
Diese Aufgabe wird bei einem Brennstoffzellensystem mit mehreren zu einem Stapel zusammengefassten Einzel-Brennstoffzellen, die jeweils aus einer im wesentlichen ebenen Membran-Elektroden-Einheit, zwei an die einander gegenüberliegenden größeren Oberflächen der Membran-Elektroden-Einheit angrenzenden Gasdiffusionslagen in Form einer Faserstruktur und einer die elektrische Verbindung zur benachbarten darüber oder darunter liegenden Einzel-Brennstoffzelle herstellenden Bipolarplatte, aufweisend einen von einem Randbereich umgebenen aktiven Bereich, bestehen, erfindungsgemäß dadurch gelöst, dass die Bipolarplatten im aktiven Bereich vollständig eben ausgeführt sind, so dass der gasführende Bereich ausschließlich durch die Gasdiffusionslagen gebildet ist, welche zumindest 60% der Höhe einer Einzel-Brennstoffzelle ausmacht, wobei die Dicke der Gasdiffusionslage in der Größenordnung von 50 - 150 µm liegt.

Die Unteransprüche beinhalten vorteilhafte Weiterbildungen und Ausgestaltungen der Erfindung.

Vorteilhafterweise ist vorgesehen, dass die Dicke der Membran-Elektroden-Einheit in der Größenordnung von 10 - 50 µm liegt und/oder die Dicke der Gasdiffusionslage in der Größenordnung von 50 - 150 µm und/oder die Dicke der Bipolarplatte in der Größenordnung von 10 - 100 µm.

Wenn in dem Brennstoffzellensystem weiterhin eine zumindest einen Kühlkanal zur Führung eines Kühlmittels enthaltende Kühlkanal-Struktur vorgesehen ist, ist gemäß einer bevorzugten Weiterbildung die Kühlkanal-Struktur an zumindest einer der seitlichen Kanten der Einzel-Brennstoffzellen angrenzend vorgesehen.

Gemäß einer vorteilhaften Ausgestaltung sind zumindest zwei solcher Stapel von Einzel-Brennstoffzellen nebeneinander angeordnet vorgesehen, zwischen denen sich eine gemeinsame Kühlkanal-Struktur befindet. Infolge dieser Ausgestaltung können die einzelnen Stapel nach dem Baukastenprinzip beliebig zusammengesetzt werden. Außerdem ergibt sich eine insgesamt recht kompakte Bauform des erfindungsgemäßen Brennstoffzellensystems.

Wenn an den freien Enden des jeweiligen Stapels Endplatten vorgesehen sind, besitzen vorteilhafterweise zumindest zwei nebeneinander angeordnete Stapel von Einzel-Brennstoffzellen eine gemeinsame Endplatte. Damit ergeben sich im Stromabgriff und im Handling gleiche Voraussetzungen wie bei einem herkömmlichen Brennstoffzellensystem.

Die in verschiedenen Kühlkanal-Strukturen vorgesehenen Kühlkanäle können vorteilhafterweise im Kreuzstrom, parallel, seriell oder parallel mit abwechselnder Strömungsrichtung geschaltet sein. Dies ermöglicht auch ein schnelleres Kalt- bzw. Froststartverhalten. Dabei kann der Kühlmittelmassenstrom bei mehreren Stapeln entweder aufgeteilt werden oder durch alle Stapel nacheinander fließen. Auch können entsprechend einer festgehaltenen Stapelgeometrie die Strömungsrichtungen der einzelnen Stapel variieren (z. B. 1. Stapel von oben nach unten; 2. Stapel von links nach rechts).

Darüber hinaus können in vorzugsweise periodischen Abständen zusätzliche zumindest einen Kühlkanal enthaltene Kühlplatten innerhalb eines Stapels von Einzel-Brennstoffzellen vorgesehen sein. Dies verbessert die Kühlung und die Temperaturverteilung innerhalb des Stapels. Beispielsweise kann nach jeweils 10 bis 30 Bipolarplatten eine solcher innerer Kühlkanal vorgesehen sein.

Gemäß einer bevorzugten Ausgestaltung sind die Bipolarplatten mit einem Katalysatormaterial beschichtet, das im Wesentlichen frei von Platin oder Platin enthaltenden Legierungen ist.

Durch die durch die außen liegenden Kühlkanäle bedingte schmale Bauform und die geringe Stromdichte wird so wenig Gas pro Eintrittsfläche benötigt, dass dadurch keine Kanäle innerhalb der Bipolarplatten notwendig sind. Eine Durchströmung der Gasdiffusionslage genügt hierbei. Die Bipolarplatte kann infolge ihrer ebenen Ausgestaltung sehr dünn (< 100 µm; Ziel: Alufoliendicke) ausgebildet sein. Dadurch sinkt die Masse, die Bearbeitungszeit, die thermische Masse für das Kaltstartverhalten, die Dicke (Ziel: 150 µm bis 300 µm) der einzelnen Brennstoffzellen und folglich auch das Gesamtvolumen und die Herstellungskosten. Auch die Beschichtung ist deutlich einfacher.

Durch den Wegfall der Kühlkanäle innerhalb der Stapel verringert sich die Höhe der einzelnen Stapel. Dies kann den Nachteil der höheren notwendigen aktiven Flächen zumindest teilweise ausgleichen, so dass bei dem erfindungsgemäßen Brennstoffzellensystem allenfalls mit einem nur leicht erhöhten Bauvolumen im Vergleich zu herkömmlichen Brennstoffzellen zu rechnen ist. Darüber hinaus kann aufgrund des Wegfalls der inneren Kühlkanäle auch nur eine Bipolarplatte pro Brennstoffzelle verwendet werden.

Über die geringen Anforderungen in der Protonenleitfähigkeit bei der Stromdichte können auch kostengünstigere Membranmaterialien (Kohlenwasserstoffmembranen, Kompositmembranen usw.) verwendet werden. Darüber hinaus können Hochtemperaturmembranen verwendet bzw. das Brennstoffzellensystem kann bei höheren Temperaturen betrieben werden. Denn durch die erleichterte Kühlmöglichkeit kann ein höherer Temperaturunterschied zur Umgebung toleriert werden, was eine höhere Leistung - z. B. bei der Verwendung in einem Kraftfahrzeug - mit sich bringt.

Zusätzlich kann hier auch auf die Befeuchtung der Gase (Humidification) verzichtet (oder deutlich reduziert) werden, da die Leitfähigkeit bei den geringen Stromdichten auch bei kleinen relativen Feuchten realisierbar ist.

Da kein Platin bzw. nur geringe Mengen von Platin verwendet werden, ergibt sich eine erhebliche Senkung der Materialkosten. Zwar können infolge der zurzeit noch geringen Aktivität der platinfreien Katalysatoren bei Spannungen von 0,6 bis 0,75 V nur geringe Stromdichten (z. B. 200 mA/cm²) erreicht werden, so dass im Vergleich zu herkömmlichen Brennstoffzellensystemen mit einer Leistungsdichte > 1 W/cm² ein Vielfaches an aktiver Fläche benötigt wird, um ähnliche Gesamtleistungen zu erbringen, jedoch kann aufgrund der Tatsache, dass die Kühlung der einzelnen Stapel über die Wärmeleitung der Bipolarplatten zu außenliegenden Kühlkanälen erfolgt, eine sehr schmale Bauform in der Ebene der Bipolarplatten (ca. 30 - 80 mm) realisiert werden.

Weitere Einzelheiten, Merkmale und Vorteile der Erfindung ergeben sich aus der nachfolgenden Beschreibung anhand der Zeichnungen. Es zeigen:
- Figur 1: eine Draufsicht auf ein erfindungsgemäßes Brennstoffzellen-system,
- Figur 2: einen Schnitt durch das Brennstoffzellensystem gemäß Figur 1,
- Figur 3: einen Ausschnitt eines Querschnitts durch einen Stapel von Einzel-Brennstoffzellen, und
- Figur 4: einen Querschnitt durch ein Brennstoffzellensystem.

In den Figuren sind nur die hier interessierenden Teile des Brennstoffzellensystems dargestellt, alle übrigen Elemente sind der Übersichtlichkeit halber weggelassen.

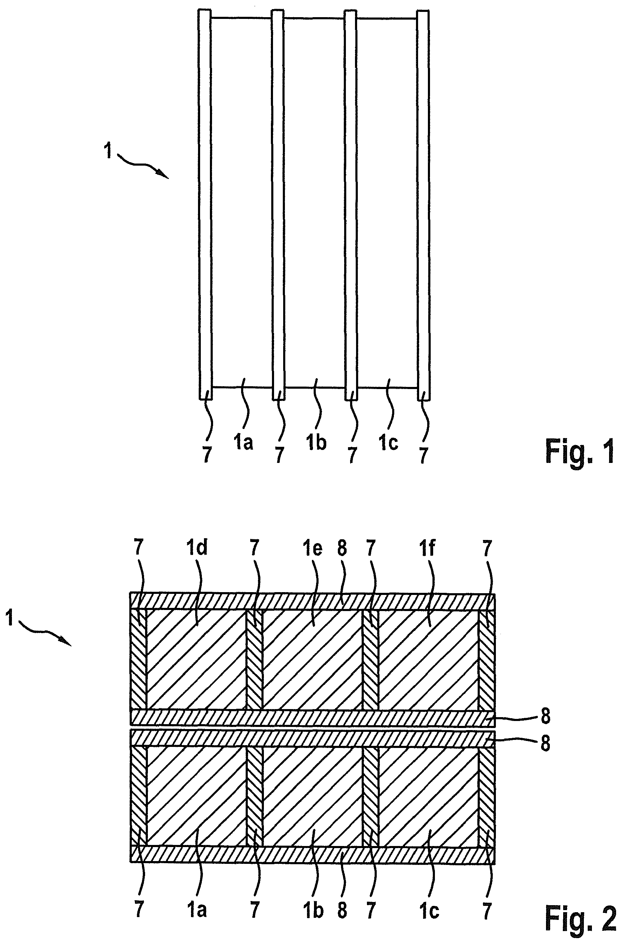

Die Figuren 1 bis 3 zeigen ein erfindungsgemäßes Brennstoffzellensystem 1 mit mehreren, zu jeweils einem Stapel 1a-1f zusammengefassten, im Wesentlichen rechteckigen oder quadratischen Einzel-Brennstoffzellen 2. Die Einzel-Brennstoffzellen 2 bestehen jeweils aus einer im wesentlichen ebenen Membran-Elektroden-Einheit 3, zwei an die einander gegenüberliegenden größeren Oberflächen der Membran-Elektroden-Einheit 3 angrenzenden Gasdiffusionslagen 4, 5 in Form einer Faserstruktur und einer die elektrische Verbindung zur benachbarten darüber oder darunter liegenden Einzel-Brennstoffzelle 2 herstellenden Bipolarplatte 6, aufweisend einen von einem Randbereich umgebenen aktiven Bereich.

Die Bipolarplatten 6 sind im aktiven Bereich vollständig eben ausgeführt, so dass der gasführende Bereich ausschließlich durch die Gasdiffusionslagen 4, 5 gebildet ist, welche zumindest 60% der Höhe einer Einzel-Brennstoffzelle 2 ausmacht. Die Bipolarplatten 6 sind weiterhin mit einem Katalysatormaterial beschichtet, das frei von Platin bzw. Platin enthaltenden Legierungen ist.

In dem Brennstoffzellensystem 1 sind mehrere Stapel 1a-1f von Einzel-Brennstoffzellen 2 nebeneinander und hintereinander angeordnet. Jeder Stapel 1a-1f ist mit einer an zwei sich gegenüberliegenden Seiten angeordneten, außen liegenden Kühlkanal-Struktur 7 versehen. Dabei teilen sich aneinander angrenzende Stapel 1a/1b bzw. 1b/1c bzw. 1d/1e bzw. 1e/1f von Einzel-Brennstoffzellen 2 eine Kühlkanal-Struktur 7 (s. Figur 2). Die Kühlkanäle in verschiedenen Kühlkanal-Strukturen 7 können im Kreuzstrom, parallel, seriell oder parallel mit abwechselnder Strömungsrichtung geschaltet sein. Dabei kann der Kühlmittelmassenstrom bei mehreren Stapeln 1a-1f entweder aufgeteilt werden oder durch alle Stapel 1a-1f nacheinander fließen. Auch können entsprechend einer festgehaltenen Stapelgeometrie die Strömungsrichtungen der einzelnen Stapel 1a-1f variieren (z. B. 1. Stapel von oben nach unten; 2. Stapel von links nach rechts).

Darüber hinaus können zusätzlich zu der außen liegenden Kühlkanal-Struktur 7 beispielsweise nach jeweils 10 bis 30 Einzel-Brennstoffzellen 2 in periodischen Abständen zusätzliche zumindest einen Kühlkanal enthaltende Kühlplatten innerhalb jedes Stapels 1a-1f angeordnet sein, um die Kühlung bzw. die Temperaturverteilung innerhalb eines Zellstapels 1a-1f zu verbessern.

Auf den von der Kühlkanal-Struktur 7 freien Seiten sind die nebeneinander angeordneten Stapel 1a-1c bzw. 1d-1f mit einer gemeinsamen Endplatte 8 verbunden.

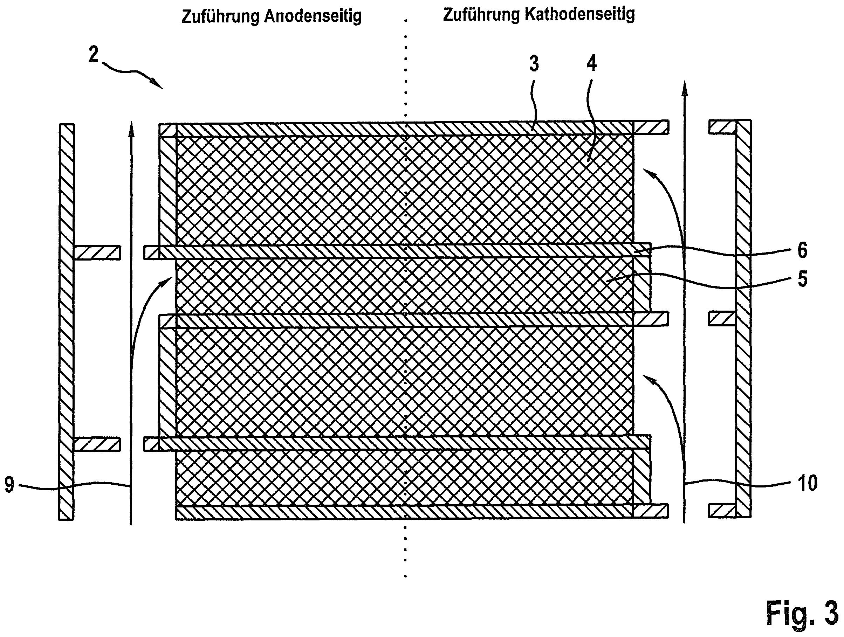

Figur 3 zeigt ein Ausschnitt eines Querschnitts eines Stapels 1a-1f. Auf der linken Seite ist ein Ausschnitt gezeigt, in dem sich die Zuführung des Wasserstoffes 9 zu der Zellebene befindet. Der Wasserstoff 9 wird seitlich zu allen Einzel-Brennstoffzellen 2 geführt und tritt durch Bereiche mit Öffnungen im Dichtungsbereich in die Einzel-Brennstoffzellen 2 ein. Hierbei wird der Wasserstoff-Massenstrom ausschließlich durch die anodenseitige Gasdiffusionslage 5 geführt und den Reaktionszonen zugeführt. Durch weitere offene Dichtungsbereiche (hier nicht dargestellt) wird das Restgas einer seitlichen Abführung (ähnlich der Zuführung) zugeführt. Die Zuführung des Sauerstoffes 10 zu den Einzel-Brennstoffzellen 2 ist auf der rechten Seite der Figur 3 dargestellt. Das Prinzip ist identisch der Wasserstoffzuführung. Wichtig ist hierbei, dass die Durchströmung der Bereiche der Reaktionsflächen ausschließlich durch die Gasdiffusionslagen 4, 5 stattfindet und dass die Bipolarplatten 6 eben und ohne eine Prägestruktur ausgebildet sind.

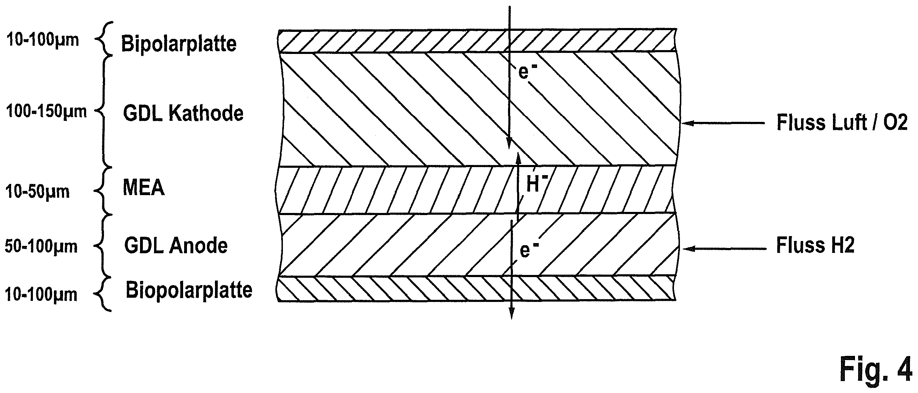

In Figur 4 ist ein schematischer Aufbau eines erfindungsgemäßen Brennstoffzellensystems 1 gezeigt. Dabei sind auch die Abmessungen der Einzelteile angegeben, um darzustellen, dass das erfindungsgemäße Brennstoffzellensystem 1 nur eine geringe Dicke aufweist.

Die Dicke der Membran-Elektroden-Einheit (MEA) 3 liegt in der Grö-ßenordnung von 10 - 50 µm, die der Gasdiffusionslage (GDL) 4, 5 in der Größenordnung von 50 - 150 µm liegt und/oder die der Bipolarplatte 6 in der Größenordnung von 10 - 100 µm liegt. Aufgrund dieser Ausgestaltung ergibt sich somit im günstigsten Fall eine minimale Dicke von 180 µm, während bisher Dicken von 1000-1500 µm üblich waren.

Die erfindungsgemäße Lösung führt aufgrund der Tatsache, dass höhere Betriebstemperaturen realisierbar sind, zu höheren Aktivitäten des Katalysators. Dies kann eine geringere Beladung oder die Verwendung eines günstigeren Katalysatormaterials ermöglichen. Weiterhin kann für die Bipolarplatten 6 ein dünnes Material verwendet werden, da die Bipolarplatten 6 wegen fehlender Abstützungen oder Verprägungen kaum Steifigkeit aufweisen müssen. Die Gasdiffusionslagen 4, 5 benötigen ebenfalls keine Steifigkeit, da sie flächig aufliegt, was wiederum zu einer höheren Leitfähigkeit führt.

Weiterhin kann aufgrund der geometrischen Ausgestaltung der Hauptmassenstrom zur Verteilung der Gase durch die Gasdiffusionslagen 4, 5 verlaufen, und der Wärmetransport kann über die Querleitfähigkeit der Bipolarplatten 6, der Gasdiffusionslagen 4, 5 bzw. der Membran-Elektroden-Einheit 3 erfolgen. Darüber hinaus bestehen wegen der idealerweise hohen Temperaturen von 100 - 150 °C kaum Anforderungen an die von der relativen Luftfeuchtigkeit abhängige Leitfähigkeit der Membran.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der in den folgenden Ansprüchen definierten Erfindung zu verlassen.

### Bezugszeichenliste

- 1: Brennstoffzellensystem
- 1a-1f: Stapel
- 2: Einzel-Brennstoffzelle
- 3: Membran-Elektroden-Einheit
- 4: Gasdiffusionslage
- 5: Gasdiffusionslage
- 6: Bipolarplatte
- 7: Kühlkanal-Struktur
- 8: Endplatte
- 9: Wasserstoff
- 10: Sauerstoff

## Patentansprüche

1. Brennstoffzellensystem mit mehreren zu einem Stapel zusammengefassten Einzel-Brennstoffzellen, die jeweils aus einer im wesentlichen ebenen Membran-Elektroden-Einheit, zwei an die einander gegenüberliegenden größeren Oberflächen der Membran-Elektroden-Einheit angrenzenden Gasdiffusionslagen in Form einer Faserstruktur und einer die elektrische Verbindung zur benachbarten darüber oder darunter liegenden Einzel-Brennstoffzelle herstellenden Bipolarplatte, aufweisend einen von einem Randbereich umgebenen aktiven Bereich, bestehen,
**dadurch gekennzeichnet, dass** die Bipolarplatten (6) im aktiven Bereich vollständig eben ausgeführt sind, so dass der gasführende Bereich ausschließlich durch die Gasdiffusionslagen (4, 5) gebildet ist, welche zumindest 60% der Höhe einer Einzel-Brennstoffzelle (2) ausmachen, wobei die Dicke der Gasdiffusionslage (4, 5) in der Größenordnung von 50 - 150 µm liegt.

2. Brennstoffzellensystem nach Anspruch 1, **dadurch gekennzeichnet, dass** die Dicke der Membran-Elektroden-Einheit (3) in der Größenordnung von 10 - 50 µm liegt und/oder die Dicke der Bipolarplatte (6) in der Größenordnung von 10 - 100 µm liegt.

3. Brennstoffzellensystem nach Anspruch 1 oder 2, wobei weiterhin eine zumindest einen Kühlkanal zur Führung eines Kühlmittels enthaltende Kühlkanal-Struktur vorgesehen ist, **dadurch gekennzeichnet, dass** die Kühlkanal-Struktur (7) an zumindest einer der seitlichen Kanten der Einzel-Brennstoffzellen (2) angrenzend vorgesehen ist.

4. Brennstoffzellensystem nach Anspruch 3, **dadurch gekennzeichnet, dass** zumindest zwei solcher Stapel (1a-1f) von Einzel-Brennstoffzellen (2) nebeneinander angeordnet vorgesehen sind, zwischen denen sich eine gemeinsame Kühlkanal-Struktur (7) befindet.

5. Brennstoffzellensystem nach einem der vorhergehenden Ansprüche mit an den freien Enden des jeweiligen Stapels vorgesehenen Endplatten, **dadurch gekennzeichnet, dass** zumindest zwei nebeneinander angeordnete Stapel (1a-1f) von Einzel-Brennstoffzellen (2) eine gemeinsame Endplatte (8) besitzen.

6. Brennstoffzellensystem nach einem der vorhergehenden Ansprüche, **dadurch gekennzeichnet, dass** in verschiedenen Kühlkanal-Strukturen (7) vorgesehenen Kühlkanäle im Kreuzstrom, parallel, seriell oder parallel mit abwechselnder Strömungsrichtung geschaltet sind.

7. Brennstoffzellensystem nach einem der vorhergehenden Ansprüche, **dadurch gekennzeichnet, dass** in vorzugsweise periodischen Abständen zusätzliche zumindest einen Kühlkanal enthaltene Kühlplatten innerhalb eines Stapels (1a-1f) von Einzel-Brennstoffzellen (2) vorgesehen sind.

8. Brennstoffzellensystem nach einem der vorhergehenden Ansprüche, **dadurch gekennzeichnet, dass** die Bipolarplatten (6) mit einem Katalysatormaterial beschichtet sind, das im Wesentlichen frei von Platin oder Platin enthaltenden Legierungen ist.

## Claims

1. A fuel cell system comprising a plurality of individual fuel cells combined to form a stack, with each of said individual fuel cells comprising a substantially planar membrane-electrode unit, two gas diffusion layers in the form of a fibrous structure, which gas diffusion layers border the mutually opposed larger surfaces of the membrane-electrode unit, and a bipolar plate producing the electrical connection to the adjacent individual fuel cell arranged thereabove or therebelow, said bipolar plate having an active region surrounded by an edge region,
**characterised in that** the bipolar plates (6) in the active region are formed in a completely planar manner, so that the gas-guiding region is formed exclusively by the gas diffusion layers (4, 5), which make up at least 60% of the height of an individual fuel cell (2), wherein the thickness of the gas diffusion layer (4, 5) lies in the order of 50-150 µm.

2. A fuel cell system according to claim 1, **characterised in that** the thickness of the membrane electrode unit (3) lies in the order of 10-50 µm and/or the thickness of the bipolar plate (6) lies in the order of 10-100 µm.

3. A fuel cell system according to claim 1 or 2, wherein a cooling channel structure containing at least one cooling channel for guiding a coolant is provided, **characterised in that** the cooling channel structure (7) is provided in a manner bordering at least one of the side edges of the individual fuel cells (2).

4. A fuel cell system according to claim 3, **characterised in that** at least two such stacks (1a-1f) of individual fuel cells (2) are arranged adjacently to one another, between which there is disposed a joint cooling channel structure (7).

5. A fuel cell system according to any one of the preceding claims, with end plates provided at the free ends of the respective stacks,
**characterised in that** at least two mutually adjacently arranged stacks (1a-1f) of individual fuel cells (2) have a common end plate (8).

6. A fuel cell system according to any one of the preceding claims,
**characterised in that** cooling channels provided in different cooling channel structures (7) are connected in cross-flow, parallel, series, or parallel with alternating flow direction.

7. A fuel cell system according to any one of the preceding claims,
**characterised in that** additional cooling plates containing at least one cooling channel are provided within a stack (1a-1f) of individual fuel cells (2) at preferably periodic intervals.

8. A fuel cell system according to any one of the preceding claims,
**characterised in that** the bipolar plates (6) are coated with a catalyst material which is substantially free from platinum or platinum-containing alloys.

## Revendications

1. Système de cellules électrochimiques comprenant plusieurs cellules électrochimiques individuelles rassemblées en un empilement, qui sont respectivement constituées d'une unité membrane-électrode essentiellement plane, de deux couches de diffusion gazeuse adjacentes aux grandes faces opposées de l'unité membrane-électrode, et réalisées sous la forme d'une structure de fibres, et d'une plaque bipolaire assurant la liaison électrique avec la cellule électrochimique individuelle adjacente située au-dessus ou au-dessous, et comprenant une zone active entourée par une zone de bord,
**caractérisé en ce que**
les plaques bipolaires (6) sont totalement planes dans leur zone active de sorte que la zone de transfert de gaz soit exclusivement formée au travers des couches de diffusion gazeuse (4, 5) qui constituent au moins 60 % de la hauteur d'une cellule électrochimique individuelle (2), l'épaisseur de la couche de diffusion gazeuse (4, 5) étant de l'ordre de 50 à 150 µm.

2. Système de cellules électrochimiques conforme à la revendication 1,
**caractérisé en ce que**
l'épaisseur de l'unité membrane-électrode (3) est de l'ordre de 10-50 µm et/ou l'épaisseur de la plaque bipolaire (6) est de l'ordre de 10-100 µm.

3. Système de cellules électrochimiques conforme à la revendication 1 ou 2, dans lequel il est en outre prévu une structure de canal de refroidissement comprenant au moins un canal de transfert d'un agent de refroidissement,
**caractérisé en ce que**
la structure de canal de refroidissement (7) est adjacente à au moins l'une des arêtes latérales des cellules électrochimiques individuelles (2).

4. Système de cellules électrochimiques conforme à la revendication 3,
**caractérisé en ce qu'**
il est prévu au moins deux empilements (1a-1f) de cellules électrochimiques individuelles (2) situés côte à côte, et entre lesquels est positionnée une structure de canal de refroidissement (7) commune.

5. Système de cellules électrochimiques conforme à l'une des revendications précédentes comprenant des plaques d'extrémité prévues aux extrémités libres de chacun des empilements,
**caractérisé en ce qu'**
au moins deux empilements (1a-1f) voisins de cellules électrochimiques (2) individuelles comportent une plaque d'extrémité (8) commune.

6. Système de cellules électrochimiques conforme à l'une des revendications précédentes,
**caractérisé en ce que**
des canaux de refroidissement situés dans différentes structures de refroidissement (7) sont branchés en courant croisé, en parallèle, en série ou en parallèle avec des directions de circulation alternées.

7. Système de cellules électrochimiques conforme à l'une des revendications précédentes,
**caractérisé en ce qu'**
à des distances, de préférence périodiques, sont en outre prévues à la partie interne d'un empilement (1a-1f) de cellules électrochimiques (2) individuelles des plaques de refroidissement comprenant au moins un canal de refroidissement.

8. Système de cellules électrochimiques conforme à l'une des revendications précédentes,
**caractérisé en ce que**
les plaques bipolaires (6) sont revêtues d'un matériau catalytique qui est essentiellement exempt de platine ou d'alliages renfermant du platine.
